# EUROPÄISCHE PATENTANMELDUNG

(11) **EP 1 703 255 A2**
(43) Veröffentlichungstag der Anmeldung: **20.09.2006**
(21) Anmeldenummer: 06110387.5
(22) Anmeldetag: 24.02.2006
(51) Int. Cl.: G01C 21/26, G01P 11/00

(54) **Verfahren und Vorrichtung zum Ermitteln einer oberen Geschwindigkeitsschranke für ein Fahrzeug**

(30) Priorität: 16.03.2005 DE 102005012131
(71) Anmelder: Siemens AG, 80506 München (DE)
(72) Erfinder: Trum, Jeroen Jan Christiaan, 5632 PT Eindhoven (NL)

(57) **Zusammenfassung**

Verfahren und Vorrichtung zum Ermitteln einer oberen Geschwindigkeitsschranke (OS) für ein Fahrzeug (2), bei dem eine Position (P) des Fahrzeugs (2) innerhalb einer vorgegebenen Route (R) erfasst wird. Ferner wird eine Zeitdauer (Z) erfasst, in der das Fahrzeug (2) von einem Startpunkt (SP) der Route (R) aus an die Position (P) gelangt. Die obere Geschwindigkeitsschranke (OS) für das Fahrzeug (2) wird ermittelt abhängig von dem Startpunkt (SP), einem vorgegebenen Zielpunkt (ZP), der Position (P) des Fahrzeugs (2) und der Zeitdauer (Z). Die obere Geschwindigkeitsschranke (OS) wird als eine Durchschnittsgeschwindigkeit ermittelt, mit der das Fahrzeug (2) von der Position (P) des Fahrzeugs (2) aus bis hin zu dem Zielpunkt (ZP) der Route (R) fahren kann, ohne im Durchschnitt eine vorgegebene Höchstgeschwindigkeit (HG) für die gesamte Route (R) zu überschreiten.

## Beschreibung

Die Erfindung betrifft ein Verfahren und eine Vorrichtung zum Ermitteln einer oberen Geschwindigkeitsschranke für ein Fahrzeug, innerhalb einer vorgegebenen Route, für die eine Höchstgeschwindigkeit vorgegeben ist.

Auf den meisten öffentlichen Straßen ist die zulässige Höchstgeschwindigkeit vorgegeben. Die Route kann beispielsweise ein Abschnitt auf einer dieser Straßen sein. Eine Geschwindigkeit des Fahrzeugs innerhalb der Route kann mit Hilfe einer bezüglich des Fahrzeugs externen Geschwindigkeitskontrolle ermittelt werden. Beispielsweise mit einer Radarkontrolle wird die momentane Geschwindigkeit des Fahrzeugs ermittelt. Es kann aber auch die Durchschnittsgeschwindigkeit des Fahrzeugs ermittelt werden, mit der die ganze Route von dem Fahrzeug zurückgelegt wird. Diese Durchschnittsgeschwindigkeit kann von einer bezüglich des Fahrzeugs externen Ermittlungsvorrichtung auf unterschiedliche Arten ermittelt werden. Das Fahrzeug kann an einem Startpunkt der Route und an einem Zielpunkt der Route registriert werden. Zusätzlich kann eine Gesamtzeitdauer gemessen werden, in der die Route von dem Fahrzeug zurückgelegt wurde. Die Durchschnittsgeschwindigkeit mit der das Fahrzeug die Route durchquert hat, ergibt sich aus dem Verhältnis der Länge der Route zu der benötigten Gesamtzeitdauer. Liegt die Durchschnittsgeschwindigkeit über der zulässigen Höchstgeschwindigkeit und über einer länderspezifisch vorgegebenen Messtoleranz, so muss von einem Fahrzeugführer des Fahrzeugs in Abhängigkeit von der Höhe der Durchschnittsgeschwindigkeit mindestens ein Bußgeld bezahlt werden.

Die Aufgabe der Erfindung ist es, ein Verfahren und eine Vorrichtung zu schaffen, das bzw. die einem Fahrzeugführer ein günstiges Verkehrsverhalten innerhalb einer vorgegebenen Route ermöglicht.

Die Aufgabe wird gelöst durch die Merkmale der unabhängigen Ansprüche. Vorteilhafte Ausgestaltungen der Erfindung sind in den Unteransprüchen gekennzeichnet.

Die Erfindung zeichnet sich aus durch ein Verfahren und eine entsprechende Vorrichtung zum Ermitteln einer oberen Geschwindigkeitsschranke für ein Fahrzeug, bei dem eine Position des Fahrzeugs innerhalb einer vorgegebenen Route erfasst wird. Ferner wird eine Zeitdauer erfasst, in der das Fahrzeug von einem Startpunkt der Route aus an die Position gelangt. Die obere Geschwindigkeitsschranke für das Fahrzeug wird abhängig von dem Startpunkt, einem vorgegebenen Zielpunkt, der Position des Fahrzeugs und der Zeitdauer ermittelt. Die obere Geschwindigkeitsschranke wird als eine Durchschnittsgeschwindigkeit ermittelt, mit der das Fahrzeug von der Position des Fahrzeugs aus bis hin zu dem Zielpunkt der Route fahren kann, ohne im Durchschnitt eine vorgegebene Höchstgeschwindigkeit für die gesamte Route zu überschreiten.

Falls die zulässige Höchstgeschwindigkeit auf einer vorgegebenen Route dadurch kontrolliert wird, dass das Fahrzeug an dem Startpunkt der vorgegebenen Route und an dem Zielpunkt der vorgegebenen Route registriert wird und die Gesamtzeitdauer gemessen wird, in der das Fahrzeug die Route zurückgelegt hat, so kann das Verfahren dazu beitragen, einfach einen Zeitverlust durch unnötig langsames Fahren zu vermeiden und das Fahrverhalten eines Fahrzeugführers ökologisch und/oder ökonomisch zu gestalten. Darüber hinaus kann das Verfahren dazu beitragen, ein Bußgeld wegen überhöhter Geschwindigkeit zu vermeiden.

In einer vorteilhaften Ausgestaltung des Verfahrens wird die Position des Fahrzeugs innerhalb der Route mit einem Ortungssystem ermittelt. Dies ermöglicht eine sehr genaue Positionsbestimmung des Fahrzeugs und ist für den Fahrzeugführer sehr komfortabel.

In einer weiteren vorteilhaften Ausgestaltung des Verfahrens wird die Position des Fahrzeugs innerhalb der Route durch eine Streckenlängenmessung bezogen auf den Startpunkt der Route ermittelt. Auf diese Weise lässt sich die Position des Fahrzeugs einfach ermitteln.

In einer weiteren vorteilhaften Ausgestaltung des Verfahrens wird die Höchstgeschwindigkeit (HG) um eine vorgegebene Messtoleranz einer Geschwindigkeitskontrolle erhöht. Diese Messtoleranz kann beispielsweise länderspezifisch sein. Dem Fahrzeugführer wird so ermöglicht, sein Fahrverhalten an die Messtoleranz anzupassen.

In einer weiteren vorteilhaften Ausgestaltung des Verfahrens wird der Startpunkt, der Zielpunkt und/oder die Route und/oder die vorgegebene Höchstgeschwindigkeit von einer bezüglich des Fahrzeugs externen Informationseinrichtung abgerufen. Wahlweise können der Startpunkt und der Zielpunkt abgerufen werden und/oder die Route. Die vorgegebene Höchstgeschwindigkeit für die Route kann auch abgerufen werden. Das Abrufen von Informationen von einer bezüglich des Fahrzeugs externen Informationseinrichtung kann den Komfort für den Fahrzeugführer einfach erhöhen.

In einer weiteren vorteilhaften Ausgestaltung des Verfahrens umfasst das Fahrzeug eine Bilderkennungsvorrichtung, die mit einer Fahrzeugkamera gekoppelt ist. Mit der Fahrzeugkamera wird ein Verkehrszeichen an der Route erfasst, das die vorgegebene Höchstgeschwindigkeit umfasst. Mit der Bilderkennungsvorrichtung wird die vorgegebene Höchstgeschwindigkeit anhand des erfassten Verkehrszeichens durch Vergleich mit gespeicherten Bilddaten ermittelt. Das automatische Ermitteln der vorgegebenen Höchstgeschwindigkeit kann den Komfort für den Fahrzeugführer einfach erhöhen.

In einer vorteilhaften Ausgestaltung der Vorrichtung umfasst sie eine Eingabeeinheit durch die der Startpunkt, der Zielpunkt und/oder die Route und/oder die vorgegebene Höchstgeschwindigkeit und/oder die Messtoleranz eingebbar sind. Falls zu Beginn der Route eine geänderte zulässige Höchstgeschwindigkeit vorgegeben ist, so besteht durch die Eingabeeinheit die Möglichkeit, die Änderung der Höchstgeschwindigkeit in die Vorrichtung einzugeben. Das gleiche gilt für den Fall, dass der Startpunkt oder der Zielpunkt der vorgegebenen Route geändert wurden.

In einer weiteren vorteilhaften Ausgestaltung umfasst die Vorrichtung die Bilderkennungsvorrichtung, die mit der Fahrzeugkamera gekoppelt ist. Das automatische Ermitteln der vorgegebenen Höchstgeschwindigkeit kann den Komfort für den Fahrzeugführer einfach erhöhen.

Ausführungsbeispiele der Erfindung sind im Folgenden anhand der schematischen Zeichnungen näher erläutert. Es zeigen:
- Figur 1: eine Route mit einem Fahrzeug 2,
- Figur 2: eine Vorrichtung zum Ermitteln einer oberen Geschwindigkeitsschranke,
- Figur 3: ein Navigationssystem, das die Vorrichtung umfasst,
- Figur 4: ein Flussdiagramm eines Verfahrens zum Ermitteln der oberen Geschwindigkeitsschranke.

Elemente gleicher Konstruktion oder Funktion sind figurenübergreifend mit den gleichen Bezugszeichen gekennzeichnet.

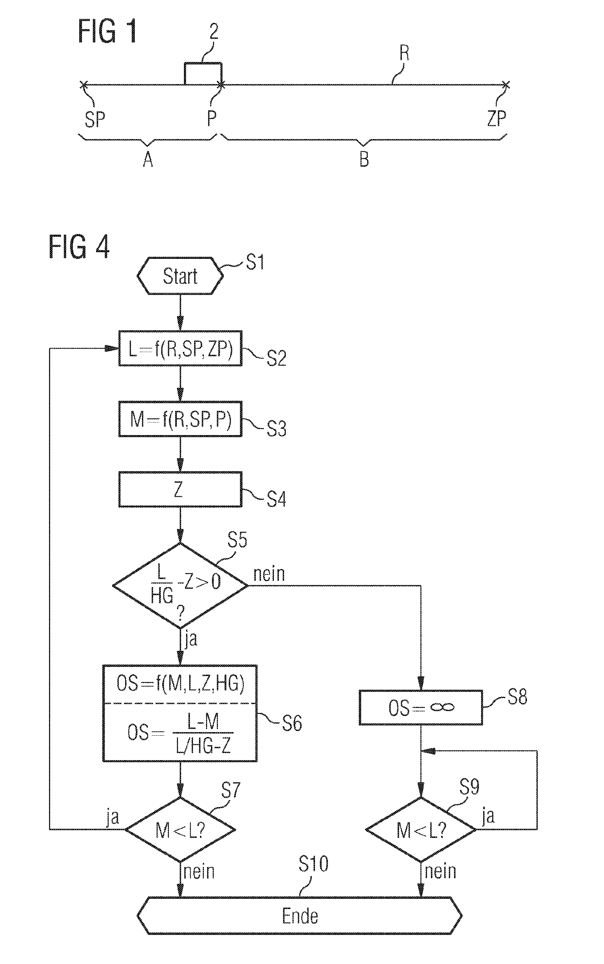

Ein Startpunkt SP und ein Zielpunkt ZP einer Route R geben eine Länge L der Route R vor (Figur 1). Bei der Route kann es sich beispielsweise um einen Abschnitt auf einer Autobahn oder einer anderen Straße handeln. An einer Position P befindet sich ein Fahrzeug 2, bevorzugt ein Kraftfahrzeug. Das Fahrzeug 2 hat einen Teilabschnitt A der Route R von dem Startpunkt SP bis hin zu der Position P in einer Zeitdauer Z zurückgelegt. Für die gesamte Route R ist eine zulässige Höchstgeschwindigkeit HG vorgegeben. Dabei kann es sich beispielsweise um eine Geschwindigkeitsbeschränkung aufgrund einer Baustelle handeln, es kann aber auch eine andere Geschwindigkeitsbeschränkung sein. An dem Startpunkt SP und an dem Zielpunkt ZP befinden sich Mittel zum Registrieren des Fahrzeugs 2. Diese Mittel können beispielsweise eine Videokamera umfassen, mit der ein Kennzeichen des Fahrzeugs 2 aufgezeichnet wird.

Das Fahrzeug 2 darf die Route R im Durchschnitt höchstens mit der zulässigen Höchstgeschwindigkeit HG zurücklegen. Sonst muss ein Fahrzeugführer des Fahrzeugs 2 ein Bußgeld bezahlen. Der Fahrzeugführer hat mehrere Möglichkeiten auf die zulässige Höchstgeschwindigkeit HG zu reagieren. Eine erste Möglichkeit ist, von dem Startpunkt SP der Route R bis hin zu dem Zielpunkt ZP fortlaufend eine momentane Geschwindigkeit des Fahrzeugs 2 zu kontrollieren. Dadurch wird der Fahrzeugführer abgelenkt. Dies trägt zu einem erhöhten Unfallrisiko bei.

Eine zweite Möglichkeit für den Fahrzeugführer auf die Höchstgeschwindigkeit HG zu reagieren, besteht darin, so langsam zu Fahren, dass die Höchstgeschwindigkeit HG garantiert nicht überschritten wird. Dies kann zu einem Verlangsamen eines gesamten Verkehrsflusses und zu einer Staubildung auf der Route R beitragen.

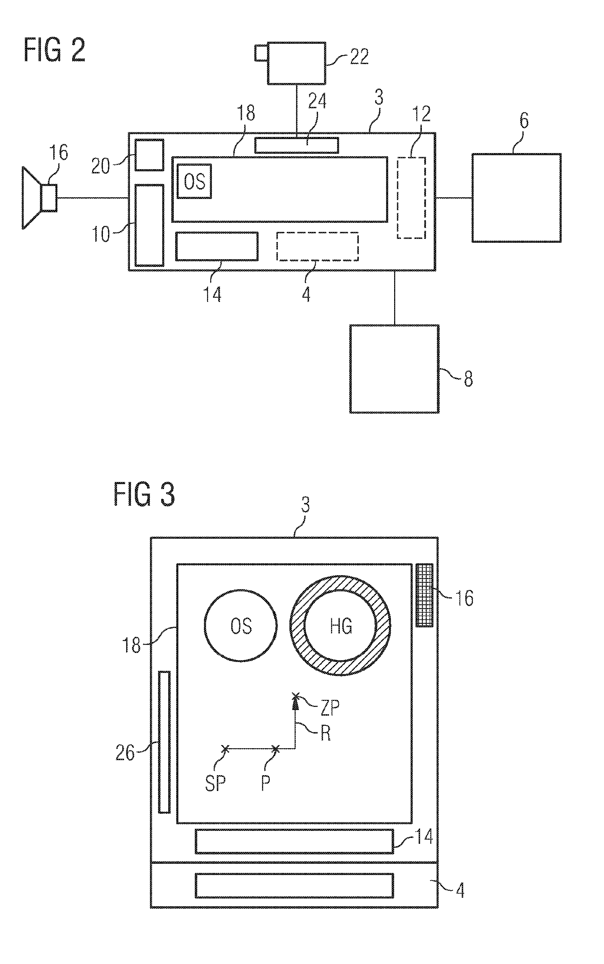

Eine Vorrichtung 3 zum Ermitteln einer oberen Geschwindigkeitsschranke OS für ein Fahrzeug 2 (Figur 2) umfasst eine Speichereinheit 4, ein Ortungssystem 6 und eine Messeinheit 8. Die Vorrichtung 3 schafft die Möglichkeit, dass der Fahrzeugführer zu jedem Zeitpunkt innerhalb der Route R weiß, wie schnell er fahren darf, ohne an dem Zielpunkt ZP die zulässige Höchstgeschwindigkeit HG im Durchschnitt überschritten zu haben und ohne den Verkehr auf der Route R zu behindern. In der Speichereinheit 4 sind der Startpunkt SP, der Zielpunkt ZP, die Route R und die Länge L der Route R, sowie die zulässige Höchstgeschwindigkeit HG für die Route R gespeichert. Das Ortungssystem 6 umfasst einen Kilometerzähler, mit dem die Position P innerhalb der Route R bestimmt wird. Mit der Messeinheit 8 wird die Zeitdauer Z ermittelt, in der das Fahrzeug 2 von dem Startpunkt SP bis zu der Position P gelangt. Die erfassten Daten werden in einer Auswerteeinheit 10 zusammengeführt, die dann die obere Geschwindigkeitsschranke OS ermittelt. Eine Ausgabeeinheit 12 gibt die obere Geschwindigkeitsschranke OS aus. Die Ausgabeeinheit 12 umfasst einen Lautsprecher 16 und/oder eine optische Anzeige 18. Über den Lautsprecher 16 wird bevorzugt eine angenehm klingende kurze Melodie ausgegeben, wenn die obere Geschwindigkeitsschranke OS überschritten wird. Die optische Anzeige 18 umfasst die obere Geschwindigkeitsschranke OS, die bevorzugt ähnlich einer Richtgeschwindigkeit auf der Autobahn dargestellt ist. Die Vorrichtung 3 weist eine Mobilfunkeinrichtung 20 auf. Mittels der Mobilfunkeinrichtung 20 können der Startpunkt SP, der Zielpunkt ZP und/oder die Route R und/oder die vorgegebene Höchstgeschwindigkeit HG von einer bezüglich des Fahrzeugs externen Informationsquelle abgerufen, empfangen und aktualisiert werden. Die Ausgabeeinheit 12 kann auch mit einem Vibrationsalarm, beispielsweise an einem Lenkrad des Fahrzeugs 2 gekoppelt sein.

In der Regel wird die zulässige Höchstgeschwindigkeit HG mindestens an dem Startpunkt SP der Route R durch ein Verkehrszeichen angezeigt. Mit einer Fahrzeugkamera 22 kann das Verkehrszeichen erfasst werden. Mit einer Bilderkennungsvorrichtung 24, die mit der Fahrzeugkamera 22 gekoppelt ist, kann die zulässige Höchstgeschwindigkeit ermittelt werden durch Vergleich des erfassten Verkehrszeichens mit gespeicherten Bilddaten. Die Bilddaten umfassen beispielsweise alle möglichen Geschwindigkeitsbeschränkungen eines, bevorzugt mehrerer Länder. Die Bilddaten können in der Speichereinheit 4 gespeichert sein und/oder von einer bezüglich des Fahrzeugs 2 externen Informationsquelle abgerufen werden.

Ein Navigationssystem (Figur 3) umfasst die Vorrichtung 3. Die optische Anzeige 18 umfasst vorzugsweise einen übersichtlichen Bildschirm. Auf dem Bildschirm wird bevorzugt die obere Geschwindigkeitsschranke OS, die zulässige Höchstgeschwindigkeit HG, sowie die Route R mit dem Startpunkt SP und dem Zielpunkt ZP, sowie die Position P des Fahrzeugs 2 dargestellt. Es kann auch eine Länge N eines Restabschnitts B (Figur 1) dargestellt werden, der sich von der Position P bis zu dem Zielpunkt ZP hin erstreckt. Außerdem kann signalisiert werden, wenn eine Mindestzeitdauer überschritten ist, in der die Route R mindestens durchfahren werden soll. Die Mindestzeitdauer ergibt sich aus dem Verhältnis der Länge L der Route R zu der zulässigen Höchstgeschwindigkeit HG. Das Navigationssystem verfügt bevorzugt über einen Satellitenempfänger 26 und einen Lautsprecher 16. Das Navigationssystem weist eine Eingabeeinheit 14 auf, die ein Eingeben des Startpunkts SP, des Zielpunkts ZP und/oder der Route R und/oder der vorgegebenen Höchstgeschwindigkeit HG ermöglicht. Die Eingabeeinheit 14 kann beispielsweise einen Touch Screen oder eine Tastatur umfassen. Das Navigationssystems umfasst die Speichereinheit 4, die einen integrierten Speicher und/oder einen Aufnahmeschacht für einen Wechseldatenträger umfasst. Der Wechseldatenträger kann beispielsweise eine CD-ROM oder eine Flash-Memory-Card sein. Die Speichereinheit 4 kann auch ohne integrierten Speicher ausgebildet sein. Auf dem integrierten Speicher und/oder dem Wechseldatenträger ist bevorzugt eine Straßenkarte gespeichert. Die Straßenkarte umfasst die Route R mit dem Startpunkt SP und dem Zielpunkt ZP. Auf der Speichereinheit 4 kann auch die Höchstgeschwindigkeit HG gespeichert sein. Ferner kann die Eingabeeinheit ein Mikrophon und eine Spracherkennungssoftware umfassen.

Sobald das Fahrzeug 2 den Startpunkt SP der Route R passiert, wird in der Vorrichtung 3 ein Programm gestartet, das die Schritte S1 bis S8 (Figur 4) abarbeitet. Das Programm ist in der Speichereinheit 4 gespeichert. Es kann auch der momentane Verfahrensstand in der Speichereinheit 4 gespeichert werden, wenn beispielsweise bei einer Pause oder beim Tanken das Fahrzeug (2) abgestellt wird, so dass beim Weiterfahren das Verfahren weiter abgearbeitet werden kann. In einem Schritt S1 wird das Programm gestartet. Danach wird ein Schritt S2 ausgeführt, bei dem die Länge L der Route R aufgrund des Verlaufs der Route R, des Startpunkts SP, und des Zielpunkts ZP ermittelt wird. In einem Schritt S3 wird die Position P des Fahrzeugs 2 innerhalb der Route R und die Länge M des Teilabschnitts A ermittelt. Die Länge M kann beispielsweise abhängig von der Route R, die in der Speichereinheit 4 gespeichert ist, und der Position P ermittelt werden. In einem Schritt S4 wird die Zeitdauer Z bestimmt, in der das Fahrzeug 2 von dem Startpunkt SP aus zu der Position P gelangt ist. In einem Schritt S5 wird geprüft, ob die Mindestzeitdauer bereits überschritten ist, bevorzugt entsprechend der in dem Schritt S5 angegebenen Vergleichsvorschrift, und das Programm zu einem Schritt S8 springt. Dies kann beispielsweise kurz vor dem Zielpunkt ZP, bei sehr langsamer Fahrt oder nach einer langen Pause der Fall sein. Ist die Mindestzeitdauer nicht überschritten, so wird in einem Schritt S6 wird von der Auswerteeinheit 10 die obere Geschwindigkeitsschranke OS ermittelt in Abhängigkeit von der Länge M des Teilabschnitts A, der Zeitdauer Z, der Länge L der Route R und der zulässigen Höchstgeschwindigkeit HG, bevorzugt entsprechend der in dem Schritt S6 angegebenen Berechnungsvorschrift. Die Schritte S2, S3 und S4 können in ihrer Reihenfolge beliebig vertauscht werden. In einem Schritt S7 wird geprüft ob M < L ist, bzw. das Fahrzeug 2 den Zielpunkt ZP noch nicht passiert hat. Solange M < L ist, werden die Schritte S3 bis S7 wiederholt. Ansonsten wird in einem Schritt S10 das Programm beendet. Falls beim Abarbeiten des Schrittes S5 die Mindestzeitdauer überschritten ist, so wird in einem Schritt S8 dem Fahrzeugführer angezeigt, dass er den Restabschnitt B mit beliebiger Geschwindigkeit zurücklegen kann. In einem Schritt S9 wird geprüft, ob M < L ist, bzw. das Fahrzeug 2 den Zielpunkt ZP noch nicht passiert hat. Solange M < L ist, wird der Schritt S9 wiederholt und dem Fahrzeugführer angezeigt, dass er den Restabschnitt B mit beliebiger Geschwindigkeit zurücklegen kann. Das Programm kann auch ohne die Schritte S8 und/oder S9 abgearbeitet werden. Sobald M ≥ L ist, wird das Programm in einem Schritt S10 beendet.

Die Berechnung der oberen Geschwindigkeitsschranke OS kann auch auf andere Weise erfolgen. So kann die Länge M des Abschnittes A durch einen Entfernungsmesser, insbesondere durch einen Kilometerzähler, erfasst werden. Die Zeitdauer Z kann auch bestimmt werden durch das Vorgeben beliebiger geeigneter Zeitintervalle und Zählen der Zeitintervalle, die durchschritten werden, bis das Fahrzeug an der Position P ist. Die obere Geschwindigkeitsschranke OS kann auch bestimmt werden, indem die Länge N des Restabschnitts B (Figur 1) ermittelt wird und indem eine Restdauer T als Differenz aus der Mindestzeitdauer, in der die gesamte Route R mindestens durchfahren werden soll, und der Zeitdauer Z ermittelt wird. Die Restdauer T soll das Fahrzeug 2 mindestens benötigen um von der Position P aus zu dem Zielpunkt ZP zu gelangen. Die obere Geschwindigkeitsschranke ergibt sich dann aus dem Verhältnis aus der Länge N des Restabschnitts B zu der Restdauer T. Bei dem Ermitteln der oberen Geschwindigkeitsschranke OS kann auch eine länderspezifische vorgegebene Messtoleranz bei einer Geschwindigkeitskontrolle berücksichtigt werden. Damit erhöht sich die zulässige Höchstgeschwindigkeit HG um die Messtoleranz und geht mit einem höheren Wert in die Berechnung der oberen Geschwindigkeitsschranke OS ein. Die obere Geschwindigkeitsschranke OS kann dann mit und/oder ohne Berücksichtigung der Messtoleranz angezeigt werden. Die Messtoleranz kann über die Eingabeeinheit 14 eingegeben werden und/oder in der Speichereinheit 4 gespeichert werden und/oder von einer bezüglich des Fahrzeugs 2 externen Informationsquelle abgerufen werden. Darüber hinaus kann die obere Geschwindigkeitsschranke OS durch beliebige andere Kombination der angegebenen Größen berechnet werden, die zu dem selben Ergebnis führt.

Die Erfindung ist nicht auf die angegebenen Ausführungsbeispiele beschränkt. Die Vorrichtung 3 kann als selbstständiges Gerät ausgebildet sein. Die Vorrichtung 3 kann aber auch in einem beliebigen anderen elektronischen Gerät integriert sein, beispielsweise in einem Handheld-Computer, einem Laptop, einem Autoradio oder einem Bordcomputer. Die Vorrichtung 3 kann auch ohne Mobilfunkeinrichtung 20 ausgestattet sein. Die Vorrichtung 3 kann mit dem Satellitenempfänger 26 ausgestattet sein. Das Navigationssystem kann auch ohne Satellitenempfänger 26 und/oder mit der Mobilfunkeinrichtung 20 ausgestattet sein.

## Patentansprüche

1. Verfahren zum Ermitteln einer oberen Geschwindigkeitsschranke (OS) für ein Fahrzeug (2), bei dem
- eine Position (P) des Fahrzeugs (2) innerhalb einer vorgegebenen Route (R) erfasst wird,
- eine Zeitdauer (Z) erfasst wird, in der das Fahrzeug (2) von einem Startpunkt (SP) der Route (R) aus an die Position (P) gelangt,
- die obere Geschwindigkeitsschranke (OS) für das Fahrzeug (2) ermittelt wird abhängig von dem Startpunkt (SP), einem vorgegebenen Zielpunkt (ZP), der Position (P) des Fahrzeugs (2) und der Zeitdauer (Z),
wobei die obere Geschwindigkeitsschranke (OS) als eine Durchschnittsgeschwindigkeit ermittelt wird, mit der das Fahrzeug (2) von der Position (P) des Fahrzeugs (2) aus bis hin zu dem Zielpunkt (ZP) der Route (R) fahren kann, ohne im Durchschnitt eine vorgegebene Höchstgeschwindigkeit (HG) für die gesamte Route (R) zu überschreiten.

2. Verfahren nach Anspruch 1, bei dem die Position (P) innerhalb der Route (R) mit einem Ortungssystem (6) ermittelt wird.

3. Verfahren nach Anspruch 1, bei dem die Position (P) durch eine Streckenlängenmessung bezogen auf den Startpunkt (SP) ermittelt wird.

4. Verfahren nach einem der vorstehenden Ansprüche, bei dem die Höchstgeschwindigkeit (HG) um eine vorgegebene Messtoleranz einer Geschwindigkeitskontrolle erhöht wird.

5. Verfahren nach einem der vorstehenden Ansprüche, bei dem der Startpunkt (SP), der Zielpunkt (ZP) und/oder die Route (R) und/oder die vorgegebene Höchstgeschwindigkeit (HG) von einer bezüglich des Fahrzeugs externen Informationseinrichtung abgerufen werden.

6. Verfahren nach einem der vorstehenden Ansprüche, bei dem das Fahrzeug (2) eine Bilderkennungsvorrichtung (24) umfasst, die mit einer Fahrzeugkamera (22) gekoppelt ist und bei dem mit der Fahrzeugkamera (22) ein Verkehrszeichen erfasst wird, das die vorgegebene Höchstgeschwindigkeit (HG) umfasst, und mit der Bilderkennungsvorrichtung (24) die vorgegebene Höchstgeschwindigkeit (HG) ermittelt wird durch Vergleich des erfassten Verkehrszeichens mit vorgegebenen Bilddaten.

7. Vorrichtung zum Ermitteln einer oberen Geschwindigkeitsschranke (OS) für ein Fahrzeug (2), die ausgebildet ist zum
- Erfassen einer Position (P) des Fahrzeugs (2) innerhalb einer vorgegebenen Route (R),
- Erfassen einer Zeitdauer (Z), in der das Fahrzeug (2) von einem Startpunkt (SP) der Route (R) aus an die Position (P) gelangt,
- Ermitteln einer oberen Geschwindigkeitsschranke (OS) für das Fahrzeug (2) abhängig von dem Startpunkt (SP), einem vorgegebenen Zielpunkt (ZP), der Position (P) des Fahrzeugs (2) und der Zeitdauer (Z),
wobei die obere Geschwindigkeitsschranke (OS) als eine Durchschnittsgeschwindigkeit ermittelt wird, mit der das Fahrzeug (2) von der Position (P) des Fahrzeugs (2) aus bis hin zu dem Zielpunkt (ZP) der Route (R) fahren kann, ohne im Durchschnitt eine vorgegebene Höchstgeschwindigkeit (HG) für die gesamte Route (R) zu überschreiten.

8. Vorrichtung nach Anspruch 7, die eine Eingabeeinheit (14) umfasst, durch die der Startpunkt (SP), der Zielpunkt (ZP) und/oder die Route (R) und/oder die vorgegebene Höchstgeschwindigkeit (HG) und/oder die Messtoleranz eingebbar sind.

9. Vorrichtung nach einem der Ansprüche 7 oder 8, die eine Bilderkennungsvorrichtung (24) umfasst, die mit einer Fahrzeugkamera (22) gekoppelt ist.
